# EUROPÄISCHE PATENTSCHRIFT

(11) **EP 1 848 246 B1**
(45) Veröffentlichungstag und Bekanntmachung des Hinweises auf die Patenterteilung: **06.06.2012**
(21) Anmeldenummer: 07105597.4
(22) Anmeldetag: 04.04.2007
(51) Int. Cl.: H04R 27/02, H04R 25/00, G09B 21/00, G09B 21/04, G09B 5/04, H04B 7/005

(54) **Hörgerätesystem mit Funksendegerät und Verfahren zum Steuern des Funksendegeräts**
Hearing aid system comprising a radio transmitting device and method for controlling said radio transmitting device
Système d'appareil auditif comprenant un appareil de transmission radio et procédé de commande de cet appareil de transmission radio

(30) Priorität: 19.04.2006 DE 102006018155
(43) Veröffentlichungstag der Anmeldung: 24.10.2007
(73) Patentinhaber: Siemens Audiologische Technik GmbH, 91058 Erlangen (DE)
(72) Erfinder: Grafenberg, Esfandiar, Dr., 91090 Effeltrich (DE); Rass, Uwe, 90480 Nürnberg (DE)
(74) Vertreter: Maier, Daniel Oliver

(56) Entgegenhaltungen:
- EP-A2- 1 531 650
- WO-A1-98/45963
- GB-A- 2 410 400
- US-A- 5 734 964
- US-A1- 2003 044 033

## Beschreibung

Die vorliegende Erfindung betrifft eine Funksendevorrichtung zum Übertragen von Sprachsignalen in einem Veranstaltungsraum. Darüber hinaus betrifft die vorliegende Erfindung eine Steuervorrichtung zum Steuern eines Funksendegeräts, mit dem Sprachsignale in einem Veranstaltungsraum übertragbar sind. Des Weiteren bezieht sich die vorliegende Erfindung auf entsprechende Verfahren zum Senden von Sprachsignalen und zum Steuern von Funksendegeräten.

Vor allem in Klassenzimmern werden FM-Systeme (Frequenzmodulation) verwendet, um das Signal-zu-Rauschverhältnis bei der Signalübertragung zu Hörgeräten zu verbessern. Dabei trägt der Lehrer in der Regel ein Mikrofon mit Sender und die Schüler einen Empfänger gegebenenfalls mit Anschluss an ein Hörgerät. Wenn der Lehrer den Raum verlässt und vergisst, das Mikrofon auszuschalten, können die Schüler Gespräche, die beispielsweise im Lehrerzimmer stattfinden, mitverfolgen. Der Lehrer muss also versuchen zu vermeiden, das Mikrofon nicht rechtszeitig manuell auszuschalten.

Von der Firma Phonak ist ein FM-Multifrequenzsystem für Schulen bekannt. Bei diesem System werden die Empfänger in einem Klassenzimmer automatisch auf eine konfigurierte Funkfrequenz eingestellt. Beim Wechseln der Klassenräume findet automatisch ein Frequenzwechsel beim Empfänger statt.

Aus der Druckschrift US 2003/0044033 A1 ist ein Verfahren zum Detektieren von Sendesignalen und ein Schaltsystem für Hörhilfegeräte bekannt. Dabei eingesetzte Sendemodule können von einem Hörgeräteträger getragen werden. Außerdem können die Sendemodule automatisch aktiviert werden, wenn die Audiosignale empfangen werden oder wenn sie detektieren, dass ein Hörgerät in ihre Nähe gebracht wurde.

Die Aufgabe der vorliegenden Erfindung besteht darin, den Lehrer oder einen anderen Nutzer eines FM-Senders dabei zu unterstützen, den Sender bei Nichtgebrauch zeitnah abzuschalten.

Erfindungsgemäß wird diese Aufgabe gelöst durch ein Hörgerätesystem nach Anspruch 1.

Erfindungsgemäß ist auch vorgesehen ein Verfahren nach Anspruch 6.

Vorzugsweise erfolgt das Empfangen eines Steuersignals über Funk oder induktiv. Hierbei genügen geringe Reichweiten der drahtlosen Übertragung, z. B. Bluetooth. Grundsätzlich sind aber auch andere Kurzstreckenübertragungssysteme, wie beispielsweise Infrarotsysteme, denkbar.

Die erfindungsgemäße Funksendevorrichtung kann eine Konfigurationseinrichtung aufweisen, mit der die Funksendevorrichtung in Abhängigkeit des empfangenen Steuersignals automatisch konfigurierbar ist. Insbesondere kann die Funksendevorrichtung aufgrund des Steuersignals automatisch in einen entsprechenden Funkkanal geschaltet werden. Beispielsweise kann in jedem Raum ein anderer Funkkanal automatisch eingestellt werden, so dass sich Störungen aufgrund von Veranstaltungen in benachbarten Räumen vermeiden lassen.

Darüber hinaus kann die Funksendevorrichtung mit mehreren Mikrofonen und einer Mischrichtung ausgestattet sein, so dass Sprachsignale von mehreren Personen bzw. Geräten gemischt übertragbar sind. Dies ist insbesondere dann vorteilhaft, wenn mehrere Lehrer in einem Raum den Unterricht gestalten.

Besonders vorteilhaft ist, wenn die Funksendevorrichtung tragbar ausgebildet ist. Die Funksendevorrichtung kann auch mehrere tragbare Funkeinheiten aufweisen, so dass mehrere Lehrer in einem Raum mit einem entsprechenden Sender ausgestattet werden können.

Das Steuersignal kann aus einer Abfolge von mindestens zwei Signalteilen verschiedener Sender bestehen. Damit lassen sich verhältnismäßig günstige Sender zum Gewinnen von orts- und bewegungsspezifischen Informationen einsetzen.

Im Rahmen der Erfindung wird ferner bereit gestellt eine Steuervorrichtung zum Steuern eines Funksendegeräts, mit dem Sprachsignale in einem Veranstaltungsraum übertragbar sind, mit einer Detektionseinrichtung zum Detektieren einer Anwesenheit oder einer Bewegung des Funksendegeräts in dem/den Veranstaltungsraum und einer Sendeeinrichtung zum Senden eines Steuersignals an das Funksendegerät in Abhängigkeit eines Detektionsergebnisses von der Detektionseinrichtung.

Die Steuervorrichtung umfasst vorteilhafterweise zwei Detektionseinheiten, die in einem Türrahmen einbaubar sind, um eine Bewegungsrichtung des Funksendegeräts zu detektieren. Somit ist es möglich, zu detektieren, ob ein Lehrer das Klassenzimmer betritt oder verlässt und sein Funkgerät entsprechend zum An- oder Abschalten anzusteuern.

Die Detektionseinrichtung kann ferner eine Lokalisationseinheit zum Lokalisieren des Funksendegeräts in dem Veranstaltungsraum aufweisen. Vorzugsweise besitzt die Lokalisationseinheit mindestens zwei getrennte Richtantennen. Damit ist es möglich, nicht nur die Anwesenheit eines Lehrers im Klassenzimmer, sondern auch seinen genauen Ort festzustellen, so dass sein Funksendegerät auch innerhalb des Klassenzimmers ortsabhängig konfiguriert werden kann.

Des Weiteren kann die Detektionseinrichtung auch zum Detektieren von mindestens zwei Funksendegeräten in dem Veranstaltungsraum und zum Steuern der mindesten zwei Funksendegeräte ausgelegt sein. Dadurch lassen sich in dem Veranstaltungsraum mehrere Funksendegeräte getrennt voneinander steuern bzw. konfigurieren.

Die vorliegende Erfindung wird nun anhand der beigefügten Zeichnungen näher erläutert, in denen zeigen:
- FIG 1: ein Funksystem gemäß einer Ausführungsform der vorliegenden Erfindung und
- FIG 2: ein nicht beanspruchtes Funksystem in Draufsicht.

Die nachfolgend näher geschilderten Ausführungsbeispiele stellen bevorzugte Ausführungsformen der vorliegenden Erfindung dar.

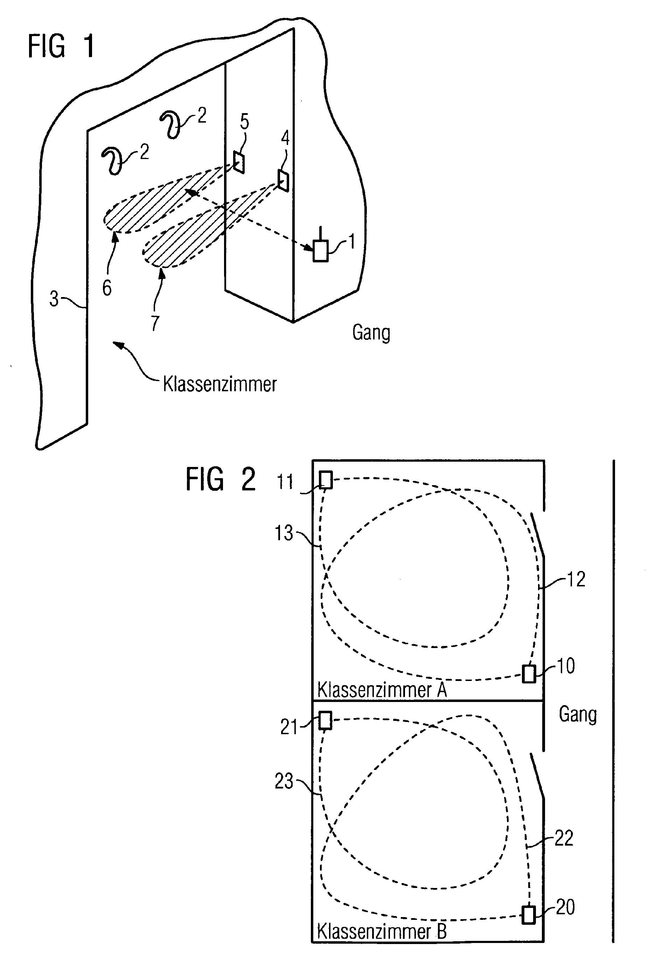

Entsprechend dem Beispiel von FIG 1 besteht ein erfindungsgemäßes Funksystem aus einer Sendeeinheit 1, die beispielsweise von einem Lehrer getragen wird, und einem oder mehreren Empfängern 2, die hier als Hörgeräte ausgestaltet sind. Die Hörgeräte 2 werden hier von Schülern getragen. Mit diesem System ist es möglich, dass der Lehrer seine akustisch dargebotenen Informationen per Funk an die Hörgeräte 2 der Schüler überträgt.

Die Schüler mit den Hörgeräten 2, oder aber auch mit Kopfhörern oder Headsets als Empfänger, befinden sich in einem Klassenzimmer. Beim Betreten des Klassenzimmers trägt der Lehrer seinen Sender 1 durch eine Tür 3. Dabei schaltet sich der Sender 1 automatisch ein. Dies wird durch zwei Richtantennen 4, 5 ermöglicht, die in der Türzarge bzw. vor und hinter der Tür 3 angeordnet sind. Die beiden Richtantennen 4, 5 sind Teil eines Senders mit kurzer Reichweite. Jede der beiden Antennen 4, 5 sendet Signale in einer jeweiligen Richtkeule 6, 7 ab. Dadurch dass die beiden Richtkeulen 6, 7 räumlich voneinander getrennt sind, kann das mit einem Mikrofon versehene Sendegerät 1 das Durchlaufen der beiden Richtkeulen 6, 7 getrennt voneinander feststellen.

Senden die beiden Antennen 4, 5 mit unterschiedlichen Frequenzen oder mit unterschiedlichen Signalmustern, so kann der Sender 1 beim Durchlaufen der Tür auch die Durchlaufrichtung bestimmen. Abhängig von der Durchlaufrichtung kann der Sender 1 dann an- oder abgeschaltet werden. Im vorliegenden Beispiel kann dies dazu ausgenützt werden, den Sender 1 abzuschalten, wenn der Lehrer das Klassenzimmer verlässt.

Die Auswerteintelligenz kann aber auch in einer Steuervorrichtung liegen, die die beiden Antennen, 4, 5 bzw. entsprechende Sender nutzt. Diese Steuervorrichtung detektiert beispielsweise durch Reflexion oder Signale vom Sendegerät 1 eine Bewegung in das/aus dem Klassenzimmer. Ein anschließend abgesandtes Steuersignal schaltet das Sendegerät 1 an oder ab.

Ein nicht beanspruchtes, zur näheren Erläuterung der Erfindung dienendes Mikrofon-Funksystems ist in FIG 2 skizzenhaft dargestellt. Dabei zeigt die FIG eine Draufsicht auf zwei Klassenzimmer und einen Gang. In dem Klassenzimmer A befinden sich zwei Antennen 10 und 11. Diese Antennen 10 und 11 strahlen hier ebenfalls Richtkeulen 12, 13 ab. Die beiden Richtkeulen 12, 13 dienen hier dazu, das gesamte Klassenzimmer zu erfassen, bzw. abzutasten. Befindet sich ein Sendegerät 1 (in FIG 2 nicht dargestellt) in dem Klassenzimmer A und zwar innerhalb einer der Richtkeulen 12, 13, so kann er das empfangene Sendesignal dazu verwenden, sich automatisch einzuschalten.

Verlässt der Lehrer mit dem Sender 1 das Klassenzimmer A und geht auf den Gang, auf dem der Sender 1 keine Funkwellen mehr empfängt, so schaltet sich der Sender 1 automatisch ab. Damit wird verhindert, dass Gespräche des Lehrers auf dem Gang von den Schülern in dem Klassenzimmer A mitgehört werden können.

Betritt der Lehrer nun das Klassenzimmer B, in dem sich die Antennen 20 und 21 befinden, so schaltet sich das Sendegerät des Lehrers ein, sobald es in den Erfassungsbereich der zugehörigen Richtkeulen 22 und 23 kommt. Auch hier reichen die Keulen 22 und 23 nicht auf den Gang, so dass das Sendegerät des Lehrers automatisch beim Verlassen des Klassenzimmers B abschaltet. Auch sind die Richtkeulen 12, 13 und 22, 23 in den Klassenzimmern A und B so ausgerichtet und dimensioniert, dass es, wenn möglich, keine Überlappung gibt.

Der Sender 1 des Lehrers lässt sich durch die Keulen 6, 7, 12, 13, 22, 23 nicht nur an- oder abschalten, sondern auch konfigurieren. Dies bedeutet, dass der Sender bzw. das Mikrofon-Funksystem ortsabhängig konfigurierbar ist. Insbesondere kann sich der Sender 1 des Lehrers beim Betreten des Klassenzimmers automatisch auf einen klassenzimmerspezifischen Funkkanal einstellen. In einem anderen Klassenzimmer stellt sich der Sender automatisch auf einen anderen Funkkanal ein. Auch auf diese Weise lassen sich Störungen zwischen Funksystemen zweier benachbarter Klassenzimmer vermeiden.

Wenn die zu den Antennen 4, 5, 10, 11, 20, 21 zugehörigen Sender auch in der Lage sind, ihre Sendesignale zeitlich abhängig zu variieren, so kann die Konfiguration des Funksystems beispielsweise von der Tageszeit abhängig gemacht werden. Darüber hinaus können die in den Klassenzimmern installierten Sender auch beispielsweise von den Empfängern konfiguriert werden, wenn sie entsprechende Schnittstellen besitzen.

Die Konfiguration des FM-Funksystems kann sich auch auf die Empfänger 2 beziehen. Außerdem können zusätzlich Gegebenheiten bzw. Ausstattungen des Raums bei der Konfiguration der FM-Sender und / oder FM-Empfänger berücksichtigt werden. Dies ist insbesondere dann sinnvoll, wenn die Daten digital übertragen werden.

Ist beispielsweise in einem Klassenzimmer auch ein Lautsprechersystem installiert, wird das Sprachsignal des Lehrers auch auf die Lautsprecher geschaltet. Die Funkempfänger an den Hörgeräten der Schüler können dann gegebenenfalls ausgeschaltet bleiben.

Auch bei diesem Ausführungsbeispiel können die Antennen 10, 11, 20, 21 Teil einer Steuervorrichtung sein, wobei die Antennen zunächst zum Detektieren eines Sendegeräts 1 und anschließend zum Senden eines entsprechenden Steuersignals an das Sendegerät 1 dienen.

Befinden sich mehr als ein Sender im Raum, so wird das bereits beim Eintreten der jeweiligen Personen in den Raum automatisch von einem der Sendegeräte oder von der Steuervorrichtung mit Detektionseinrichtung erkannt. Der zweite hinzukommende Sender wird dann automatisch mit dem schon vorhandenen Sender gemischt. Hierzu empfängt der Sender 1 das Signal von Sender 2, addiert das Signal zu seinem eigenen hinzu und sendet es zu den Schülern. Dies bedeutet, dass zumindest der erste Sender dann auch mit einem Empfänger ausgestattet sein muss. Durch diesen Multi-Senderbetrieb können zwei oder mehr Lehrer gleichzeitig über das Funksystem zu den Schülern sprechen.

Anstelle eines weiteren Lehrers kann beispielsweise auch eine Video- bzw. Stereoanlage als zusätzlicher Sender dienen und so in den Unterricht integriert werden. Die Schüler können dann sämtliche Quellen über ihre FM-Empfänger hören.

Die Antennen 10, 11 in dem Klassenzimmer A können so platziert werden, dass eine genaue Ortsbestimmung des Senders 1 bzw. des Lehrers in dem Klassenzimmer A möglich ist. Diese zusätzlich gewonnene Ortsinformation werden gegebenenfalls dazu verwendet, von den Antennen 10, 11 ortsspezifische Steuersignale abzusenden. Mit diesen Steuersignalen kann dann der Sender 1 ortsspezifisch konfiguriert werden. Beispielsweise lässt sich so die Sendesignalamplitude des Senders 1 abhängig vom Ort in dem Veranstaltungsraum variieren. Andere ortsabhängige Konfigurationsmöglichkeiten betreffen Rauschunterdrückungsmaßnahmen und Filterungen.

## Patentansprüche

1. Hörgerätesystem mit
- mindestens einem Hörgerät (2),
- einem Funksendegerät (1), mit dem Sprachsignale in einem Veranstaltungsraum an das mindestens eine Hörgerät (2) übertragbar sind, **gekennzeichnet durch**
- eine Sendeeinrichtung, die zwei Richtantennen (4, 5) umfasst, zum Senden je eines Steuersignals in einer jeweiligen Richtkeule (6, 7) an das Funksendegerät (1), wobei
- die beiden Steuersignale unterschiedliche Frequenzen oder Signalmuster aufweisen,
- mit dem Funksendegerät (1) oder einer Steuervorrichtung ein Durchlaufen des Funksendegeräts (1) **durch** die beiden Richtkeulen (6, 7) getrennt voneinander und damit eine Durchlaufrichtung feststellbar ist, und
- das Übertragen der Sprachsignale von dem Funksendegerät (1) an das mindestens eine Hörgerät (2) in Abhängigkeit von der Durchlaufrichtung des Funksendegeräts (1) steuerbar ist.

2. Hörgerätesystem nach Anspruch 1, wobei die zwei Richtantennen (4, 5) in einen Türrahmen oder davor und dahinter eingebaut sind.

3. Hörgerätesystem nach Anspruch 1 oder 2, das eine Lokalisationseinheit zum Lokalisieren des Funksendegeräts (1) in dem Veranstaltungsraum aufweist.

4. Hörgerätesystem nach Anspruch 3, wobei die Lokalisationseinheit die zwei Richtantennen (4, 5, 10, 11, 20, 21) nutzt.

5. Hörgerätesystem nach einem der Ansprüche 1 bis 4 mit einer Detektionseinrichtung zum Detektieren von mindestens zwei Funksendegeräten (1) in dem Veranstaltungsraum und zum Steuern der mindestens zwei Funksendegeräte (1) ausgelegt ist.

6. Verfahren zum Steuern eines Funksendegeräts (1), mit dem Sprachsignale in einem Veranstaltungsraum übertragen werden, **gekennzeichnet durch**
- Detektieren einer Durchlaufrichtung des Funksendegeräts (1) **durch** zwei Richtkeulen (6, 7), in denen jeweils ein Steuersignal gesendet wird, wobei die Steuersignale unterschiedliche Frequenzen oder Signalmuster aufweisen,
- Steuern des Funksendegeräts (1) in Abhängigkeit des Detektionsergebnisses.

7. Verfahren nach Anspruch 6, wobei das Funksendegerät (1) in dem Veranstaltungsraum lokalisiert wird.

8. Verfahren nach Anspruch 6 oder 7, wobei in dem Veranstaltungsraum mindestens zwei Funksendegeräte (1) detektiert und angesteuert werden.

## Claims

1. Hearing device system with
- at least one hearing device (2),
- a radio transmission apparatus(1), with which speech signals are able to be transmitted in an events room to the at least one hearing device (2), **characterised by**
- a transmit device, which includes two directional antennas (4, 5) for transmitting a control signal in a respective directional beam (6, 7) to the radio transmission device (1) in each instance, whereby
- the two control signals comprise different frequencies or signal patterns,
- with the radio transmission apparatus (1) or a control apparatus, a movement of the radio transmission apparatus (1) through the two directional beams (6, 7) takes place separately from one another and a direction of movement can thus be determined
- the transmission of the speech signals from the radio transmission device (1) to the at least one hearing device (2) can be controlled depending on the direction of movement of the radio transmission device (1).

2. Hearing device system according to claim 1, whereby the two directional antennas (4, 5) are built into a door frame or in front of it or behind it.

3. Hearing device system according to claim 1 or 2, which comprises a localisation unit for localisation of the radio transmission device (1) in the events room.

4. Hearing device system according to claim 3, whereby the localisation unit uses the two directional antennas (4, 5, 10, 11, 20, 21).

5. Hearing device system according to one of claims 1 to 4, with a detection device for detecting at least two radio transmission devices (1) in the events room and for controlling the at least two radio transmission devices (1).

6. Method for controlling a radio transmission device (1), with which speech signals are transmitted in an events room, **characterised by**
- detecting a direction of movement of the radio transmission device (1) through two directional beams (6, 7), in which a control signal is transmitted in each instance, whereby the control signals comprise different frequencies or signal patterns,
- controlling the radio transmission device (1) depending on the detection result.

7. Method according to claim 6, whereby the radio transmission device (1) is localised in the events room.

8. Method according to claim 6 or 7, whereby at least two radio transmission devices (1) are detected and controlled in the events room.

## Revendications

1. Système de prothèse auditive comprenant
- au moins une prothèse ( 2 ) auditive,
- un appareil ( 1 ) d'émission radio, par lequel des signaux vocaux peuvent être transmis dans un espace de manifestation à la au moins une prothèse ( 2 ) auditive, **caractérisé par**
- un dispositif d'émission, qui comprend deux antennes ( 4, 5 ) directionnelles, pour envoyer respectivement un signal de commande dans un lobe ( 6, 7 ) directionnel respectif à l'appareil ( 1 ) d'émission radio, dans lequel
- les deux signaux de commande ont des fréquences pou des modèles de signal différents,
- par l'appareil ( 1 ) d'émission radio ou par un dispositif de commande, il peut être constaté une traversée de l'appareil ( 1 ) d'émission radio par les deux lobes ( 6, 7 ) directionnels séparément l'un de l'autre et ainsi un sens de traversée, et
- la transmission des signaux vocaux par l'appareil ( 1 ) d'émission radio à la au moins une prothèse ( 2 ) auditive peut être commandée en fonction du sens dans lequel l'appareil ( 1 ) d'émission radio est traversé.

2. Système de prothèse auditive suivant la revendication 1, dans lequel les deux antennes ( 4, 5 ) directionnelles sont incorporées dans un cadre de porte ou devant et derrière.

3. Système de prothèse auditive suivant la revendication 1 ou 2, qui comporte une unité de localisation pour localiser l'appareil (1) d'émission radio dans l'espace de manifestation.

4. Système de prothèse auditive suivant la revendication 3, dans lequel l'unité de localisation utilise les deux antennes ( 4, 5, 10, 11, 20, 21 ) directionnelles.

5. Système de prothèse auditive suivant l'une des revendications 1 à 4, comprenant un dispositif de détection qui est conçu pour la détection d'au moins deux appareils ( 1 ) d'émission radio dans l'espace de manifestation et pour commander les au moins deux appareils ( 1 ) d'émission radio.

6. Procédé de commande d'un appareil ( 1 ) d'émission radio, par lequel des signaux vocaux peuvent être transmis dans un espace de manifestation, **caractérisé par**
- la détection d'un sens de traversée de l'appareil ( 1 ) d'émission radio par deux lobes ( 6, 7 ) directionnels, dans lesquels respectivement un signal de commande est envoyé, les signaux de commande ayant des fréquences ou des modèles de signal différents,
- la commande de l'appareil ( 1 ) d'émission radio en fonction du résultat de la détection.

7. Procédé suivant la revendication 5, dans lequel l'appareil ( 1 ) d'émission radio est localisé dans l'espace de manifestation.

8. Procédé suivant la revendication 6 ou 7, dans lequel au moins deux appareils ( 1 ) d'émission radio sont détectés et commandés dans l'espace de manifestation.
